# EUROPEAN PATENT SPECIFICATION

(11) **EP 3 675 532 B1**
(45) Date of publication and mention of the grant of the patent: **17.04.2024**
(21) Application number: 17924474.4
(22) Date of filing: 06.09.2017
(51) Int. Cl.: H04W 4/20, H04L 5/00, H04W 76/27, H04W 74/08, H04W 68/00

(54) **DOWNLINK DATA TRANSMISSION METHOD AND DEVICE, USER EQUIPMENT, AND BASE STATION**
VERFAHREN UND VORRICHTUNG ZUR DOWNLINK-DATENÜBERTRAGUNG, BENUTZERGERÄT UND BASISSTATION
PROCÉDÉ ET DISPOSITIF DE TRANSMISSION DE DONNÉES DE LIAISON DESCENDANTE, ÉQUIPEMENT UTILISATEUR ET STATION DE BASE

(43) Date of publication of application: 01.07.2020
(73) Proprietor: Beijing Xiaomi Mobile Software Co., Ltd., Beijing 100085 (CN)
(72) Inventor: HONG, Wei, Beijing 100085 (CN)
(74) Representative: dompatent von Kreisler Selting Werner - Partnerschaft von Patent- und Rechtsanwälten mbB
(86) International application number: PCT/CN2017/100779
(87) International publication number: WO 2019/047078

(56) References cited:
- EP-A1- 2 557 890
- CN-A- 102 223 715
- CN-A- 106 792 608
- CN-A- 106 793 170
- US-A1- 2014 036 685
- ERICSSON: "Signalling flows for paging and resume for inactive state", 3GPP DRAFT; [NR CP] R2-166920 - SIGNALLING FLOWS FOR PAGING AND RESUME FOR INACTIVE STATE, 3RD GENERATION PARTNERSHIP PROJECT (3GPP), MOBILE COMPETENCE CENTRE ; 650, ROUTE DES LUCIOLES ; F-06921 SOPHI , vol. RAN WG2, no. Kaohsiung, Taiwan; 20161010 - 20161014 9 October 2016 (2016-10-09), XP051150447, Retrieved from the Internet: URL:http://www.3gpp.org/ftp/Meetings_3GPP_ SYNC/RAN2/Docs/ [retrieved on 2016-10-09]
- ZTE ET AL: "Consideration on DL Data Transmission in RRC_INACTIVE State", 3GPP DRAFT; R2-1701929 CONSIDERATION ON DL DATA TRANSMISSOIN IN RRC_INACTIVE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Athens, Greece; 20170213 - 20170217 12 February 2017 (2017-02-12), XP051212463, Retrieved from the Internet: URL:http://www.3gpp.org/ftp/Meetings_3GPP_ SYNC/RAN2/Docs/ [retrieved on 2017-02-12]

## Description

### TECHNICAL FIELD

The disclosure relates to the technical field of communications, and more particularly to, a downlink data transmission method and device, a User Equipment (UE), a base station, and a computer-readable storage medium.

### BACKGROUND

In the past 30 years, mobile communications have experienced rapid development from voice services to mobile bandwidth data services, which not only profoundly changed people's lifestyles, but also greatly promoted social and economic development. As two main driving forces for the development of mobile communications in the future, the mobile Internet and the Internet of Things provide broad application scenarios for a 5th Generation (5G) mobile communication technology. For 2020 and beyond, the data traffic may have a thousand times of growth, and the connection of hundreds of billions of devices and diverse business requirements may bring severe challenges to the design of 5G systems. 5G may meet people's needs for ultra-high traffic density, ultra-high connection density and ultra-high mobility, and may provide users with ultimate business experiences such as high-definition video, virtual reality, augmented reality, cloud desktop, and online gaming. 5G may penetrate into the Internet of Things and other fields, and may be deeply integrated with industrial facilities, medical equipment, and transportation to fully realize the "Internet of Everything" and effectively meet the information service needs of vertical industries such as industry, medical care and transportation. 5G may also significantly improve the energy consumption and cost efficiency of network construction operations, comprehensively enhance service innovation capabilities, and expand the mobile communication industry space.

Since a Long Term Evolution (LTE) network does not support a Radio Resource Control inactivate (RRC_inactive) state, the LTE network does not support sending downlink data to an inactivate UE either.

Tdoc R2-166920 titled with "Signalling flows for paging and resume for inactive state", R2-1701929 titled with "Consideration on DL Data Transmission in RRC_INACTIVE State" and EP2557890A1 discuss related technology.

### SUMMARY

In view of this, the disclosure provides a downlink data transmission method and device, a UE, a base station, and a computer-readable storage medium, intended to directly transmit downlink data to a UE in an inactive state in a 5G network, and improve data transmission efficiency.

According to a first aspect of embodiments of the disclosure, a downlink data transmission method is provided, as described in any one of claims 1-2.

According to a second aspect of the embodiments of the disclosure, a downlink data transmission method is provided, as described in any one of claims 3-4.

According to a third aspect of the embodiments of the disclosure, a user equipment is provided, as described in any one of claims 5-6.

According to a fourth aspect of the embodiments of the disclosure, base station is provided, as described in any one of claims 7-8.

### BRIEF DESCRIPTION OF THE DRAWINGS

The accompanying drawings, which are incorporated in and constitute a part of this specification, illustrate embodiments consistent with the disclosure and, together with the specification, serve to explain the principles of the disclosure.
FIG. 1 is a flowchart showing a downlink data transmission method according to an exemplary embodiment.
FIG. 2A is a flowchart showing another downlink data transmission method according to an exemplary embodiment.
FIG. 2B is a flowchart showing another downlink data transmission method according to an exemplary embodiment.
FIG. 3 is a flowchart showing still another downlink data transmission method according to an exemplary embodiment.
FIG. 4 is a flowchart showing still another downlink data transmission method according to an exemplary embodiment.
FIG. 5 is a signaling flowchart showing a downlink data transmission method according to an exemplary embodiment.
FIG. 6 is a block diagram illustrating a downlink data transmission device according to an exemplary embodiment.
FIG. 7 is a block diagram illustrating another downlink data transmission device according to an exemplary embodiment.
FIG. 8 is a block diagram illustrating another downlink data transmission device according to an exemplary embodiment.
FIG. 9 is a block diagram illustrating a downlink data transmission device according to an exemplary embodiment.
FIG. 10 is a block diagram illustrating another downlink data transmission device according to an exemplary embodiment.
FIG. 11 is a block diagram illustrating another downlink data transmission device according to an exemplary embodiment.
FIG. 12 is a block diagram illustrating a device suitable for downlink data transmission according to an exemplary embodiment.
FIG. 13 is a block diagram illustrating another device suitable for downlink data transmission according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

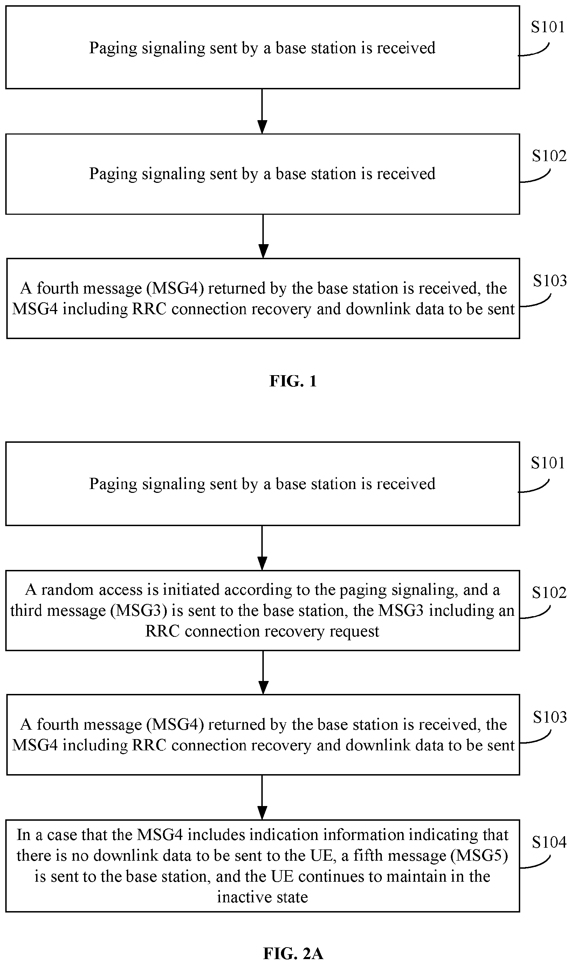

FIG. 1 is a flowchart showing a downlink data transmission method according to the embodiment of invention. This embodiment is described from the angle of a UE in an inactive state. As shown in FIG. 1, the downlink data transmission method includes the following steps.

In step S101, paging signaling sent by a base station is received.

When a base station (gNB) has downlink data to be transmitted to a UE in an inactive state and the gNB decides to adopt direct transmission, the gNB may send paging signaling in a wireless notification region to page the UE.

In step S102, a random access is initiated according to the paging signaling, and a third message (MSG3) is sent to the base station, the MSG3 including an RRC connection recovery request.

After receiving the paging signaling, the UE needs to initiate a random access to the gNB and send an RRC connection recovery request through the MSG3.

In step S103, a fourth message (MSG4) returned by the base station is received, the MSG4 including RRC connection recovery and downlink data to be sent.

After receiving the MSG3 from the UE, the gNB may transmit downlink data to be sent through an MSG4. In addition, the MSG4 may also include indication information indicating whether there is downlink data to be sent to the UE subsequently.

In the foregoing embodiment, a random access may be initiated according to received paging signaling, an MSG3 including an RRC connection recovery request may be sent to a base station, and then an MSG4 that is returned by the base station and includes downlink data may be received, so that the downlink data can be directly transmitted to a UE in an inactive state in a 5G network, and downlink data transmission can be completed through the MSG3 and the MSG4, thus improving data transmission efficiency.

FIG. 2A is a flowchart showing another downlink data transmission method according to an exemplary embodiment. As shown in FIG. 2A, when step S103 is performed, the downlink data transmission method includes the following steps.

In step S104, in a case that the MSG4 includes indication information indicating that there is no downlink data to be sent to the UE subsequently, a fifth message (MSG5) is sent to the base station, and the UE continues to maintain in the inactive state, the MSG5 carrying indication information indicating successful reception of the downlink data.

When the UE successfully receives the MSG4 including downlink data and the MSG4 includes indication information indicating that there is no downlink data to be sent to the UE subsequently, the UE sends an MSG5 to the gNB to indicate that the downlink data in the MSG4 has been successfully received, and continue to maintain the UE in an inactive state.

In the foregoing embodiment, in a case that the MSG4 includes indication information indicating that there is no downlink data to be sent to the UE subsequently, a fifth message MSG5 may be sent to the base station to indicate that the downlink data in the MSG4 has been successfully received and the UE continuing to maintain in an inactive state. The receiving situation of the downlink data may be fed back to the base station, and the energy consumption of the UE is reduced.

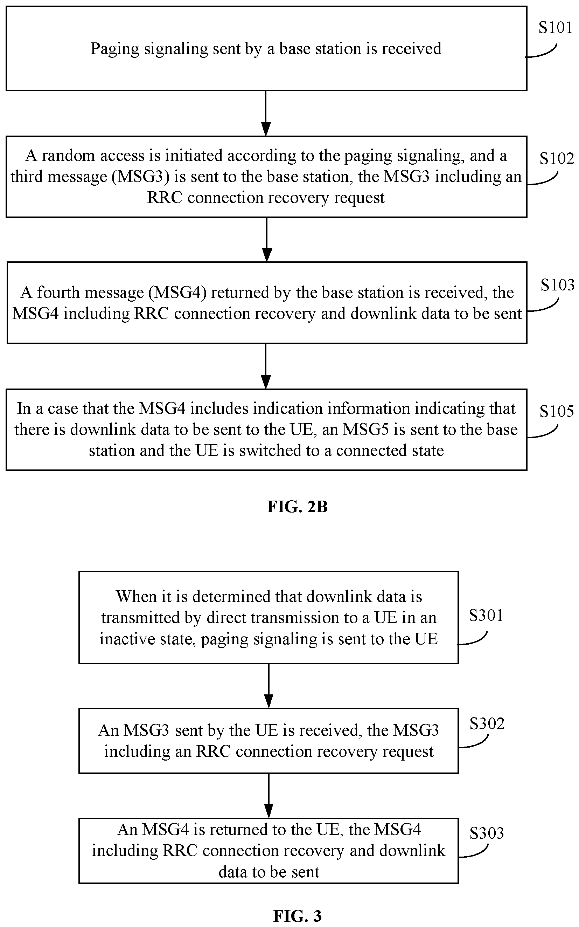

FIG. 2B is a flowchart showing another downlink data transmission method according to an exemplary embodiment which is not a part of the claimed invention. As shown in FIG. 2B, when step S103 is performed, the downlink data transmission method may further include the following steps.

In step S105, in a case that the MSG4 includes indication information indicating that there is downlink data to be sent to the UE, a fifth message MSG5 may be sent to the base station, and the UE may be switched to a connected state, the MSG5 carrying indication information indicating successful reception of the downlink data.

When the UE successfully receives the MSG4 including downlink data and the MSG4 includes indication information indicating that there is downlink data to be sent to the UE, the UE may send an MSG5 to the gNB to indicate that the downlink data in the MSG4 has been successfully received, and may be switched to a connected state, in order to receive subsequent downlink data.

In the foregoing embodiment, in a case that the MSG4 includes indication information indicating that there is downlink data to be sent to the UE, a fifth message MSG5 may be sent to the base station to indicate that the downlink data in the MSG4 has been successfully received, and the UE may be switched to a connected state, in order to receive subsequent downlink data.

FIG. 3 is a flowchart showing still another downlink data transmission method according to the embodiment of invention. The embodiment is described from a base station. As shown in FIG. 3, the downlink data transmission method includes the following steps.

In step S301, when it is determined that downlink data is transmitted by direct transmission to a UE in an inactive state, paging signaling is sent to the UE.

When a gNB has downlink data to be transmitted to a UE in an inactive state and the gNB decides to adopt direct transmission, the gNB may send paging signaling in a wireless notification region to page the UE.

In step S302, an MSG3 sent by the UE is received, the MSG3 including an RRC connection recovery request.

After receiving the paging signaling, the UE needs to initiate a random access to the gNB and send an RRC connection recovery request in the MSG3.

In step S303, an MSG4 is returned to the UE, the MSG4 including RRC connection recovery and downlink data to be sent.

After receiving the MSG3 from the UE, the gNB may transmit downlink data to be sent through an MSG4. In addition, the MSG4 includes indication information indicating whether there is downlink data to be sent to the UE subsequently.

In the foregoing embodiment, the paging signaling is sent to the UE, the MSG3 that is sent by the UE and includes the RRC connection recovery request is received, and then the MSG4 including the downlink data is returned to the UE, so that the downlink data can be directly transmitted to the UE in an inactive state in a 5G network, and downlink data transmission can be completed through the MSG3 and the MSG4, thus improving data transmission efficiency.

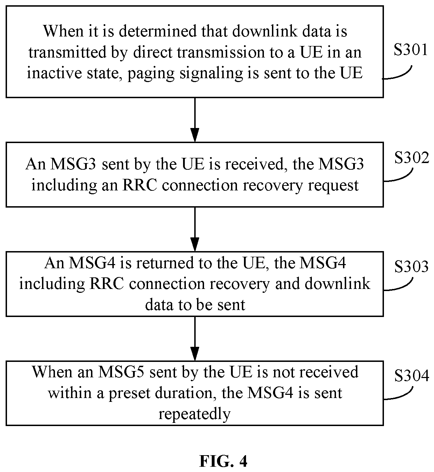

FIG. 4 is a flowchart showing still another downlink data transmission method according to an exemplary embodiment. As shown in FIG. 4, when step S303 is performed, the downlink data transmission method includes the following steps.

In step S304, when an MSG5 sent by the UE is not received within a preset duration, the MSG4 is repeatedly sent, the MSG5 carrying indication information indicating successful reception of the downlink data.

The preset duration may be set as required.

In this embodiment, in a case that the UE does not successfully receive the MSG4 including downlink data, the MSG5 may not be sent to the gNB. In a case that the gNB does not receive the MSG5 sent by the UE within a preset duration, it may be determined that the UE does not successfully receive the MSG4, and the MSG4 may be repeatedly sent.

In the foregoing embodiment, when the MSG5 fails to be received from the UE within a preset duration, the MSG4 may be repeatedly sent so as to improve the success rate of downlink data transmission.

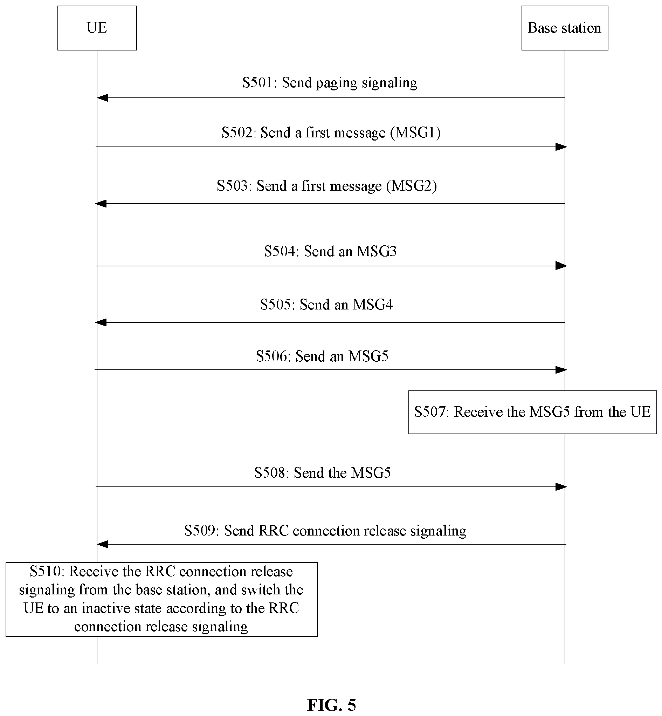

FIG. 5 is a signaling flowchart showing a downlink data transmission method according to an exemplary embodiment. This embodiment is described from the perspective of the interaction between a UE and a base station. As shown in FIG. 5, the method may include the following steps.

In step S501, a base station sends paging signaling to a UE.

In step S502, the UE sends a first message (MSG1) to the base station according to the received paging signaling.

In step S503, the base station sends a second message (MSG2) to the UE according to the received MSG1.

In step S504, the UE sends a third message MSG3 to the base station, the MSG3 including an RRC connection recovery request.

In step S505, the base station sends an MSG4 to the UE according to the received MSG3, the MSG4 including RRC connection recovery, downlink data to be sent, and indication information indicating whether there is downlink data to be sent to the UE subsequently.

In step S506, in a case that the MSG4 includes indication information indicating that there is no downlink data to be sent to the UE subsequently, the UE sends an MSG5 to the base station, and continues to maintain the UE in an inactive state.

The MSG5 may carry indication information indicating successful reception of the downlink data.

In step S507, the base station receives the MSG5 from the UE.

In step S508, in a case that the MSG4 includes indication information indicating that there is downlink data to be sent to the UE, the UE sends an MSG5 to the base station, and is switched to a connected state.

The MSG5 may carry indication information indicating successful reception of the downlink data.

In step S509, after receiving the MSG5 from the UE, upon when the downlink data is completely sent, the base station sends RRC connection release signaling to the UE.

After receiving the downlink data completely, the base station may switch the UE to an inactive state by sending the RRC connection release signaling.

In step S510, the UE receives the RRC connection release signaling from the base station, and the UE is switched to an inactive state according to the RRC connection release signaling.

In the foregoing embodiment, by sending RRC connection release signaling to the UE, the UE may be switched to an inactive state according to the RRC connection release signaling, thereby reducing energy consumption.

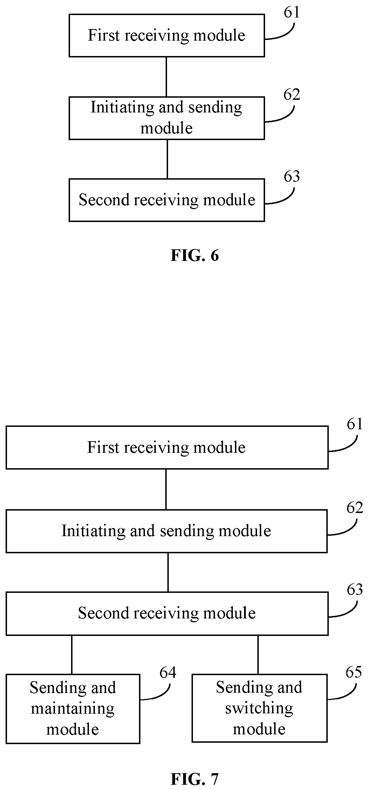

FIG. 6 is a block diagram illustrating a downlink data transmission device according to an exemplary embodiment. The device may be applied to a UE in an inactive state. As shown in FIG. 6, the device includes a first receiving module 61, an initiating and sending module 62, and a second receiving module 63.

The first receiving module 61 is configured to receive paging signaling from a base station.

When a base station (gNB) has downlink data to be transmitted to a UE in an inactive state and the gNB decides to adopt direct transmission, the gNB may send paging signaling in a wireless notification region to page the UE.

The initiating and sending module 62 is configured to initiate a random access according to the paging signaling received by the first receiving module 61, and send a third message MSG3 to the base station, the MSG3 including an RRC connection recovery request.

After receiving the paging signaling, the UE needs to initiate a random access to the gNB and send an RRC connection recovery request through the MSG3.

The second receiving module 63 is configured to receive a fourth message MSG4 returned, according to the MSG3 sent by the initiating and sending module 62, by the base station, the MSG4 including RRC connection recovery and downlink data to be sent.

After receiving the MSG3 from the UE, the gNB may transmit downlink data to be sent through an MSG4. In addition, the MSG4 may also include indication information indicating whether there is downlink data to be sent to the UE subsequently.

In the foregoing embodiment, a random access may be initiated according to a received paging signaling, an MSG3 including an RRC connection recovery request may be sent to a base station, and then an MSG4 that is returned by the base station and includes downlink data may be received, so that the downlink data can be directly transmitted to a UE in an inactive state in a 5G network, and downlink data transmission can be completed through the MSG3 and the MSG4, thus improving data transmission efficiency.

FIG. 7 is a block diagram illustrating another downlink data transmission device according to an exemplary embodiment. As shown in FIG. 7, on the basis of the foregoing embodiment shown in FIG. 6, the device may further include a sending and maintaining module 64 or a sending and switching module 65.

The sending and maintaining module 64 is configured to send, when the second receiving module 63 receives a fourth message MSG4 returned by the base station, a fifth message MSG5 to the base station in a case that the MSG4 includes indication information indicating that there is no downlink data to be sent to the UE subsequently, and continue to maintain the UE in the inactive state, the MSG5 carrying indication information indicating successful reception of the downlink data.

When the UE successfully receives the MSG4 including downlink data and the MSG4 includes indication information indicating that there is no downlink data to be sent to the UE subsequently, the UE may send an MSG5 to the gNB to indicate that the downlink data in the MSG4 has been successfully received, and continue to maintain in an inactive state.

The sending and switching module 65 is configured to send, when the second receiving module 63 receives a fourth message MSG4 returned by the base station, a fifth message MSG5 to the base station in a case that the MSG4 includes indication information indicating that there is downlink data to be sent to the UE, and switch the UE to a connected state, the MSG5 carrying indication information indicating successful reception of the downlink data.

When the UE successfully receives the MSG4 including downlink data and the MSG4 includes indication information indicating that there is downlink data to be sent to the UE, the UE may send an MSG5 to the gNB to indicate that the downlink data in the MSG4 has been successfully received, and may be switched to a connected state, in order to receive subsequent downlink data.

In the foregoing embodiment, when the MSG4 includes indication information indicating that there is no downlink data to be sent to the UE subsequently, a fifth message MSG5 may be sent to the base station to indicate that the downlink data in the MSG4 has been successfully received and the UE may continue to maintain in an inactive state. The receiving situation of the downlink data may be fed back to the base station, and the energy consumption of the UE may be reduced. When the MSG4 includes indication information indicating that there is downlink data to be sent to the UE, a fifth message MSG5 may be sent to the base station to indicate that the downlink data in the MSG4 has been successfully received, and the UE may be switched to a connected state, in order to receive subsequent downlink data.

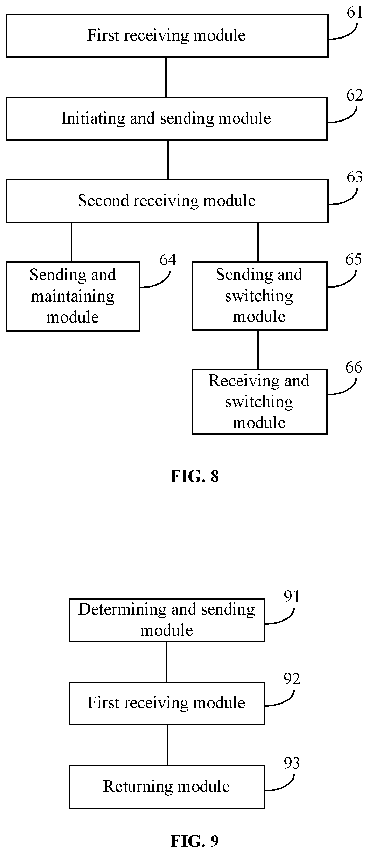

FIG. 8 is a block diagram illustrating another downlink data transmission device according to an exemplary embodiment. As shown in FIG. 8, on the basis of the foregoing embodiment shown in FIG. 7, the device may further include a receiving and switching module 66.

The receiving and switching module 66 is configured to receive, after the sending and switching module 65 switches the UE to the connected state, RRC connection release signaling from the base station upon when the downlink data is received completely, and switch the UE to the inactive state according to the RRC connection release signaling.

After receiving the downlink data completely, the base station may switch the UE to an inactive state by sending the RRC connection release signaling.

In the foregoing embodiment, an RRC connection release signaling sent by the base station may be received, and the UE may be switched to an inactive state according to the RRC connection release signaling, thereby reducing energy consumption.

FIG. 9 is a block diagram illustrating a downlink data transmission device according to an exemplary embodiment. The device may be applied to a base station. As shown in FIG. 9, the device includes a determining and sending module 91, a first receiving module 92 and a returning module 93.

The determining and sending module 91 is configured to send, when it is determined that downlink data is transmitted to a UE in an inactive state by direct transmission, paging signaling to the UE.

When a gNB has downlink data to be transmitted to a UE in an inactive state and the gNB decides to adopt direct transmission, the gNB may send paging signaling in a wireless notification region to page the UE.

The first receiving module 92 is configured to receive, after the determining and sending module 91 sends the paging signaling to the UE, a third message MSG3 from the UE, the MSG3 including an RRC connection recovery request.

After receiving the paging signaling, the UE needs to initiate a random access to the gNB and send an RRC connection recovery request in the MSG3.

The returning module 93 is configured to return, after the first receiving module 92 receives the MSG3, a fourth message MSG4 to the UE, the MSG4 including RRC connection recovery and downlink data to be sent.

After receiving the MSG3 from the UE, the gNB may transmit downlink data to be sent through an MSG4. In addition, the MSG4 may also include indication information indicating whether there is downlink data to be sent to the UE subsequently.

In the foregoing embodiment, the paging signaling may be sent to the UE, the MSG3 that is sent by the UE and includes the RRC connection recovery request may be received, and then the MSG4 including the downlink data may be returned to the UE, so that the downlink data may be directly transmitted to the UE in an inactive state in a 5G network, and downlink data transmission may be completed through the MSG3 and the MSG4, thus improving data transmission efficiency.

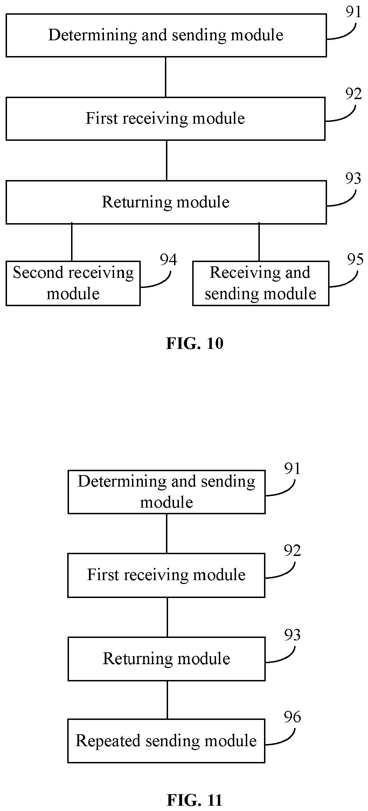

FIG. 10 is a block diagram illustrating another downlink data transmission device according to an exemplary embodiment. As shown in FIG. 10, on the basis of the foregoing embodiment shown in FIG. 9, the device may further include a second receiving module 94 or a receiving and sending module 95.

The second receiving module 94 is configured to receive, in a case that the MSG4 returned by the returning module 93 includes indication information indicating that there is no downlink data to be sent to the UE subsequently, a fifth message MSG5 from the UE, the MSG5 carrying indication information indicating successful reception of the downlink data.

When the UE successfully receives the MSG4 including downlink data and the MSG4 includes indication information indicating that there is no downlink data to be sent to the UE subsequently, the UE may send an MSG5 to the gNB to indicate that the downlink data in the MSG4 has been successfully received.

The receiving and sending module 95 is configured to send, in a case that the MSG4 returned by the returning module 93 includes indication information indicating that there is downlink data to be sent to the UE, RRC connection release signaling to the UE upon when the downlink data is sent completely after receiving a fifth message MSG5 from the UE, the MSG5 carrying indication information indicating successful reception of the downlink data.

After receiving the downlink data completely, the base station may switch the UE to an inactive state by sending the RRC connection release signaling.

In the foregoing embodiment, by receiving an MSG5 from the UE, it is possible to know the receiving situation of downlink data. RRC connection release signaling sent by the base station may be received, and the UE may be switched to an inactive state according to the RRC connection release signaling, so that the energy consumption of the UE can be reduced.

FIG. 11 is a block diagram illustrating another downlink data transmission device according to an exemplary embodiment. As shown in FIG. 11, on the basis of the foregoing embodiment shown in FIG. 9, the device may further include a repeated sending module 96.

The repeated sending module 96 is configured to repeatedly send, after the returning module 93 returns a fourth message MSG4 to the UE, the MSG4 if a fifth message MSG5 sent by the UE is not received within a preset duration, the MSG5 carrying indication information indicating successful reception of the downlink data.

The preset duration may be set as required.

In this embodiment, if the UE does not successfully receive the MSG4 including downlink data, the MSG5 may not be sent to the gNB. In a case that the gNB does not receive the MSG5 sent by the UE within a preset duration, it may be determined that the UE does not successfully receive the MSG4, and the MSG4 may be repeatedly sent.

In the foregoing embodiment, if the MSG5 sent by the UE is failed to be received within a preset duration, the MSG4 may be repeatedly sent so as to improve the success rate of downlink data transmission.

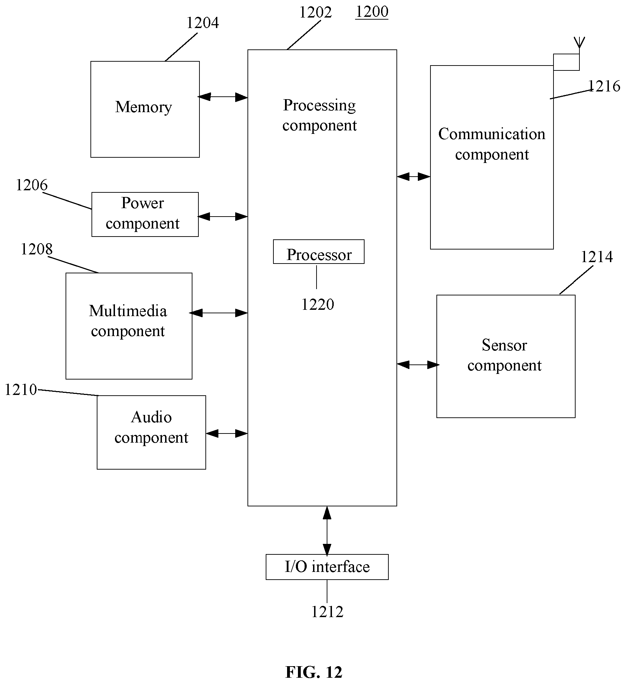

FIG. 12 is a block diagram illustrating a device suitable for downlink data transmission according to an exemplary embodiment. For example, the device 1200 may be a UE such as a mobile phone, a computer, a digital broadcast terminal, a messaging device, a gaming console, a tablet, a medical device, exercise equipment, and a personal digital assistant.

Referring to FIG. 12, the device 1200 may include one or more of the following components: a processing component 1202, a memory 1204, a power component 1206, a multimedia component 1208, an audio component 1210, an Input/Output (I/O) interface 1212, a sensor component 1214, and a communication component 1216.

The processing component 1202 is typically configured to control overall operations of the device 1200, such as operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For example, the processing component 1202 may include a multimedia module to facilitate the interaction between the multimedia component 1208 and the processing component 1202.

One of the processors 1220 in the processing component 1202 may be configured to:
receive paging signaling from a base station;
initiate a random access according to the paging signaling, and send a third message MSG3 to the base station, the MSG3 including an RRC connection recovery request; and
receive a fourth message MSG4 from the base station, the MSG4 including RRC connection recovery and downlink data to be sent.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 1206 may provide power to various components of the device 1200. The power component 1206 may include a power management system, one or more power sources, and any other components associated with the generation, management and distribution of power in the device 1200.

The multimedia component 1208 may include a screen providing an output interface between the device 1200 and the user. In some embodiments, the screen may include a Liquid Crystal Display (LCD) and a Touch Panel (TP). If the screen includes the TP, the screen may be implemented as a touch screen to receive input signals from the user. The TP includes one or more touch sensors to sense touches, swipes and gestures on the TP. The touch sensors may not only sense a boundary of a touch or swipe action, but also sense a period of time and a pressure associated with the touch or swipe action. In some embodiments, the multimedia component 1208 includes a front camera and/or a rear camera. The front camera and/or the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a Microphone (MIC) configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, or buttons. The buttons may include, but are not limited to, a home button, a volume button, a starting button, and a locking button.

The sensor component 1214 may include one or more sensors to provide status assessments of various aspects of the device 1200. For example, the sensor component 1214 may detect an open/closed status of the device 1200, and relative positioning of components. For example, the component is the display and the keypad of the device 1200. The sensor component 1214 may also detect a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a Complementary Metal Oxide Semiconductor (CMOS) or Charge Coupled Device (CCD) image sensor, for use in imaging applications. In some embodiments, the sensor component 1214 may also include an acceleration sensor, a gyroscope sensor, a magnetic sensor, a pressure sensor, or a temperature sensor.

The communication component 1216 is configured to facilitate communication, wired or wirelessly, between the device 1200 and other devices. The device 1200 may access a wireless network based on a communication standard, such as WiFi, 2G or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a Near Field Communication (NFC) module to facilitate short-range communications. For example, the NFC module may be implemented based on a Radio Frequency Identification (RFID) technology, an Infrared Data Association (IrDA) technology, an Ultra-Wideband (UWB) technology, a Bluetooth (BT) technology, and other technologies.

In exemplary embodiments, the device 1200 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors, or other electronic elements, for performing the above described methods.

In exemplary embodiments, there is also provided a non-transitory computer-readable storage medium including instructions, such as included in the memory 1204, executable by the processor 1220 of the device 1200 to implement the above described methods. For example, the non-transitory computer-readable storage medium may be a ROM, a Random Access Memory (RAM), a Compact Disc Read-Only Memory (CD-ROM), a magnetic tape, a floppy disc, an optical data storage device and the like.

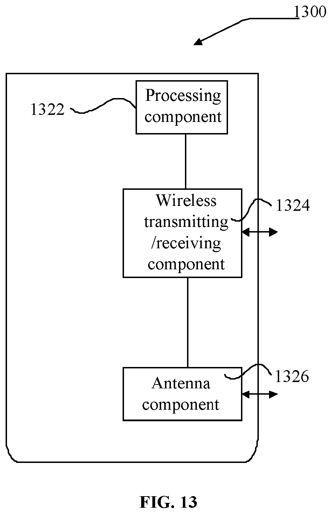

FIG. 13 is a block diagram illustrating another device suitable for downlink data transmission according to an exemplary embodiment. A device 1300 may be provided as a base station. Referring to FIG. 13, the device 1300 includes a processing component 1322, a wireless transmitting/receiving component 1324, an antenna component 1326, and a wireless interface-specific signal processing portion. The processing component 1322 may further include one or more processors.

One processor in the processing component 1322 may be configured to:
send, when it is determined that downlink data is transmitted to a UE in an inactive state by direct transmission, paging signaling to the UE;
receive a third message MSG3 from the UE, the MSG3 including an RRC connection recovery request; and
return a fourth message MSG4 to the UE, the MSG4 including RRC connection recovery and downlink data to be sent.

In exemplary embodiments, there is also provided a non-transitory computer-readable storage medium including instructions, executable by the processor 1322 of the device 1300 to implement the above described methods. For example, the non-transitory computer-readable storage medium may be a ROM, a Random Access Memory (RAM), a Compact Disc Read-Only Memory (CD-ROM), a magnetic tape, a floppy disc, an optical data storage device and the like.

The device embodiments substantially correspond to the method embodiments, and thus related parts refer to part of descriptions of the method embodiments. The device embodiment described above is only schematic. Units described as separate parts therein may or may not be physically separated. Parts displayed as units may or may not be physical units, namely, may be located in the same place or may be distributed to a plurality of network units. Part or all of the modules therein may be selected according to a practical requirement to achieve the purpose of the solutions of the embodiments. Those of ordinary skill in the art may understand and implement without creative work.

It is to be noted that relational terms "first", "second" and the like in the disclosure are adopted only to distinguish one entity or operation from another entity or operation and not always to require or imply existence of any such practical relationship or sequence between the entities or operations. Terms "include" and "comprise" or any other variation thereof is intended to cover nonexclusive inclusions, so that a process, method, object or device including a series of elements not only includes those elements, but also includes other elements that are not clearly listed, or further includes elements intrinsic to the process, the method, the object or the device. Under the condition of no more limitations, an element defined by statement "including a/an ..." does not exclude existence of another element that is the same in a process, method, object or device including the element.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.
one or more modules which facilitate the interaction between the processing component 1202 and other components. For example, the processing component 1202 may include a multimedia module to facilitate the interaction between the multimedia component 1208 and the processing component 1202.

One of the processors 1220 in the processing component 1202 may be configured to:
receive paging signaling from a base station;
initiate a random access according to the paging signaling, and send a third message MSG3 to the base station, the MSG3 including an RRC connection recovery request; and
receive a fourth message MSG4 from the base station, the MSG4 including RRC connection recovery and downlink data to be sent.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 1206 may provide power to various components of the device 1200. The power component 1206 may include a power management system, one or more power sources, and any other components associated with the generation, management and distribution of power in the device 1200.

The multimedia component 1208 may include a screen providing an output interface between the device 1200 and the user. In some embodiments, the screen may include a Liquid Crystal Display (LCD) and a Touch Panel (TP). If the screen includes the TP, the screen may be implemented as a touch screen to receive input signals from the user. The TP includes one or more touch sensors to sense touches, swipes and gestures on the TP. The touch sensors may not only sense a boundary of a touch or swipe action, but also sense a period of time and a pressure associated with the touch or swipe action. In some embodiments, the multimedia component 1208 includes a front camera and/or a rear camera. The front camera and/or the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a Microphone (MIC) configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, or buttons. The buttons may include, but are not limited to, a home button, a volume button, a starting button, and a locking button.

The sensor component 1214 may include one or more sensors to provide status assessments of various aspects of the device 1200. For example, the sensor component 1214 may detect an open/closed status of the device 1200, and relative positioning of components. For example, the component is the display and the keypad of the device 1200. The sensor component 1214 may also detect a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a Complementary Metal Oxide Semiconductor (CMOS) or Charge Coupled Device (CCD) image sensor, for use in imaging applications. In some embodiments, the sensor component 1214 may also include an acceleration sensor, a gyroscope sensor, a magnetic sensor, a pressure sensor, or a temperature sensor.

The communication component 1216 is configured to facilitate communication, wired or wirelessly, between the device 1200 and other devices. The device 1200 may access a wireless network based on a communication standard, such as WiFi, 2G or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a Near Field Communication (NFC) module to facilitate short-range communications. For example, the NFC module may be implemented based on a Radio Frequency Identification (RFID) technology, an Infrared Data Association (IrDA) technology, an Ultra-Wideband (UWB) technology, a Bluetooth (BT) technology, and other technologies.

In exemplary embodiments, the device 1200 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors, or other electronic elements, for performing the above described methods.

In exemplary embodiments, there is also provided a non-transitory computer-readable storage medium including instructions, such as included in the memory 1204, executable by the processor 1220 of the device 1200 to implement the above described methods. For example, the non-transitory computer-readable storage medium may be a ROM, a Random Access Memory (RAM), a Compact Disc Read-Only Memory (CD-ROM), a magnetic tape, a floppy disc, an optical data storage device and the like.

FIG. 13 is a block diagram illustrating another device suitable for downlink data transmission according to an exemplary embodiment. A device 1300 may be provided as a base station. Referring to FIG. 13, the device 1300 includes a processing component 1322, a wireless transmitting/receiving component 1324, an antenna component 1326, and a wireless interface-specific signal processing portion. The processing component 1322 may further include one or more processors.

One processor in the processing component 1322 may be configured to:
send, when it is determined that downlink data is transmitted to a UE in an inactive state by direct transmission, paging signaling to the UE;
receive a third message MSG3 from the UE, the MSG3 including an RRC connection recovery request; and
return a fourth message MSG4 to the UE, the MSG4 including RRC connection recovery and downlink data to be sent.

In exemplary embodiments, there is also provided a non-transitory computer-readable storage medium including instructions, executable by the processor 1322 of the device 1300 to implement the above described methods. For example, the non-transitory computer-readable storage medium may be a ROM, a Random Access Memory (RAM), a Compact Disc Read-Only Memory (CD-ROM), a magnetic tape, a floppy disc, an optical data storage device and the like.

It is to be noted that relational terms "first", "second" and the like in the disclosure are adopted only to distinguish one entity or operation from another entity or operation and not always to require or imply existence of any such practical relationship or sequence between the entities or operations. Terms "include" and "comprise" or any other variation thereof is intended to cover nonexclusive inclusions, so that a process, method, object or device including a series of elements not only includes those elements, but also includes other elements that are not clearly listed, or further includes elements intrinsic to the process, the method, the object or the device. Under the condition of no more limitations, an element defined by statement "including a/an ..." does not exclude existence of another element that is the same in a process, method, object or device including the element.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A downlink data transmission method, implemented by a User Equipment, UE, in an inactive state, the method comprising:
receiving (S101) paging signaling from a base station;
initiating (S102) a random access according to the paging signaling, and sending a third message, MSG3, to the base station, the MSG3 comprising a Radio Resource Control, RRC, connection recovery request; and
receiving (S103) a fourth message, MSG4, from the base station, the MSG4 comprising RRC connection recovery and downlink data to be sent,
**characterized in that**,
the MSG4 further comprises indication information indicating whether there is downlink data to be sent to the UE subsequently;
when receiving the MSG4 from the base station, sending a fifth message, MSG5, to the base station in a case that the MSG4 comprises indication information indicating that there is no downlink data to be sent to the UE subsequently, and continuing to maintain the UE in the inactive state, the MSG5 carrying indication information indicating successful reception of the downlink data; or
when receiving the MSG4 from the base station, sending a fifth message, MSG5, to the base station in a case that the MSG4 comprises indication information indicating that there is downlink data to be sent to the UE, and switching the UE to a connected state, the MSG5 carrying indication information indicating successful reception of the downlink data.

2. The method according to claim 1, further comprising:
after switching the UE to the connected state, receiving RRC connection release signaling from the base station upon when the downlink data is received completely, and switching the UE to the inactive state according to the RRC connection release signaling.

3. A downlink data transmission method, implemented by a base station, the method comprising:
when (S301) downlink data is determined to be transmitted by direct transmission to a User Equipment, UE, in an inactive state, sending paging signaling to the UE;
receiving (S302) a third message, MSG3, from the UE, the MSG3 comprising a Radio Resource Control, RRC, connection recovery request; and
returning (S303) a fourth message, MSG4, to the UE, the MSG4 comprising RRC connection recovery and downlink data to be sent,
**characterized in that**,
the MSG4 further comprises indication information indicating whether there is downlink data to be sent to the UE subsequently,
in a case that the MSG4 comprises indication information indicating that there is no downlink data to be sent to the UE subsequently, receiving a fifth message, MSG5, from the UE that is maintained in the inactive state, the MSG5 carrying indication information indicating successful reception of the downlink data; or
in a case that the MSG4 comprises indication information indicating that there is downlink data to be sent to the UE, after receiving a fifth message, MSG5, from the UE that is switched to a connected state, sending RRC connection release signaling to the UE upon when the downlink data is sent completely, the MSG5 carrying indication information indicating successful reception of the downlink data.

4. The method according to claim 3, further comprising:
after returning the, MSG4, to the UE, repeatedly sending the MSG4 when a fifth message, MSG5, sent by the UE is not received within a preset duration, the MSG5 carrying indication information indicating successful reception of the downlink data.

5. A user equipment, UE, **characterized by** that, in an inactive state, the UE comprising:
a first receiving module (61), configured to receive paging signaling from a base station;
an initiating and sending module (62), configured to initiate a random access according to the paging signaling received by the first receiving module, and send a third message, MSG3, to the base station, the MSG3 comprising a Radio Resource Control, RRC, connection recovery request; and
a second receiving module (63), configured to receive a fourth message, MSG4, returned, according to the MSG3 sent by the initiating and sending module, by the base station, the MSG4 comprising RRC connection recovery and downlink data to be sent,
**characterized in that**,
the MSG4 further comprises indication information indicating whether there is downlink data to be sent to the UE subsequently,
wherein the UE further comprises:
a sending and maintaining module(64), configured to send, when the second receiving module receives the MSG4 from the base station, a fifth message, MSG5, to the base station in a case that the MSG4 comprises indication information indicating that there is no downlink data to be sent to the UE subsequently, and continue to maintain the UE in the inactive state, the MSG5 carrying indication information indicating successful reception of the downlink data; or
a sending and switching module(65), configured to send, when the second receiving module receives the MSG4 from the base station, a fifth message MSG5 to the base station in a case that the MSG4 comprises indication information indicating that there is downlink data to be sent to the UE, and switch the UE to a connected state, the MSG5 carrying indication information indicating successful reception of the downlink data.

6. The UE according to claim 5, further comprising:
a receiving and switching module(66), configured to receive, after the sending and switching module switches the UE to the connected state, RRC connection release signaling from the base station upon when the downlink data is received completely, and switch the UE to the inactive state according to the RRC connection release signaling.

7. A base station, **characterized by** that, the base station comprising:
a determining and sending module (91), configured to send, when downlink data is determined to be transmitted by direct transmission to a User Equipment, UE, in an inactive state, paging signaling to the UE;
a first receiving module (92), configured to receive, after the determining and sending module sends the paging signaling to the UE, a third message, MSG3, from the UE, the MSG3 comprising a Radio Resource Control, RRC, connection recovery request; and
a returning module (93), configured to return, after the first receiving module receives the MSG3, a fourth message, MSG4, to the UE, the MSG4 comprising RRC connection recovery and downlink data to be sent,
**characterized in that**,
the MSG4 further comprises indication information indicating whether there is downlink data to be sent to the UE subsequently,
wherein the base station further comprises:
a second receiving module(94), configured to receive, in a case that the MSG4 returned by the returning module comprises indication information indicating that there is no downlink data to be sent to the UE subsequently, a fifth message, MSG5, from the UE that is maintained in the inactive state, the MSG5 carrying indication information indicating successful reception of the downlink data; or
a receiving and sending module(95), configured to send, in a case that the MSG4 returned by the returning module comprises indication information indicating that there is downlink data to be sent to the UE, RRC connection release signaling to the UE upon when the downlink data is sent completely after receiving a fifth message, MSG5, from the UE that is switched to a connected state, the MSG5 carrying indication information indicating successful reception of the downlink data.

8. The base station according to claim 7, further comprising:
a repeated sending module(96), configured to repeatedly send, after the returning module returns the, MSG4, to the UE, the MSG4 when a fifth message, MSG5, sent by the UE is not received within a preset duration, the MSG5 carrying indication information indicating successful reception of the downlink data.

9. A computer-readable storage medium, having a computer program stored thereon for execution by a processor to implement the steps of the method according to claim 1 or 2.

10. A computer-readable storage medium, having a computer program stored thereon for execution by a processor to implement the steps of the method according to claim 3 or 4.

## Patentansprüche

1. Downlink-Datenübertragungsverfahren, das von einer Benutzergerät, UE, in einem inaktiven Zustand implementiert wird, wobei das Verfahren umfasst:
Empfangen (S101) einer Paging-Signalisierung von einer Basisstation;
Initiieren (S102) eines Random Access gemäß der Paging-Signalisierung, und Senden einer dritten Nachricht, MSG3, an die Basisstation, wobei die MSG3 eine Radio-Resource-Control-, RRC, Verbindungwiederherstellungsanfrage umfasst; und
Empfangen (S103) einer vierten Nachricht, MSG4, von der Basisstation, wobei die MSG4 RRC-Verbindungswiederherstellungsdaten und Downlink-Daten umfasst, die gesendet werden sollen,
**dadurch gekennzeichnet, dass**
die MSG4 ferner Angabeinformationen umfasst, die angeben, ob es Downlink-Daten gibt, die im Anschluss an das UE gesendet werden sollen;
wenn die MSG4 von der Basisstation empfangen wird, Senden einer fünften Nachricht, MSG5, an die Basisstation, wenn die MSG4 Angabeinformationen umfasst, die angeben, dass es keine Downlink-Daten gibt, die im Anschluss an das UE gesendet werden sollen, und weiterhin Beibehalten des UE in dem inaktiven Zustand, wobei die MSG5 Angabeinformationen enthält, die einen erfolgreichen Empfang der Downlink-Daten angeben; oder
wenn die MSG4 von der Basisstation empfangen wird, Senden einer fünften Nachricht, MSG5, an die Basisstation, wenn die MSG4 Angabeinformationen umfasst, die angeben, dass es Downlink-Daten gibt, die an das UE gesendet werden sollen, und Versetzen des UE in einen verbundenen Zustand, wobei die MSG5 Angabeinformationen enthält, die einen erfolgreichen Empfang der Downlink-Daten angeben.

2. Verfahren nach Anspruch 1, das ferner umfasst:
nach dem Versetzen des UE in den verbundenen Zustand, Empfangen der RRC-Verbindungsabbausignalisierung von der Basisstation, sobald die Downlink-Daten vollständig empfangen sind, und Versetzen des UE gemäß der RRC-Verbindungsabbausignalisierung in den inaktiven Zustand.

3. Downlink-Datenübertragungsverfahren, das von einer Basisstation implementiert wird, wobei das Verfahren umfasst:
wenn (S301) bestimmt wird, dass Downlink-Daten über direkte Übertragung an ein Benutzergerät, UE, in einem inaktiven Zustand übertragen werden, Senden der Paging-Signalisierung an das UE;
Empfangen (S302) einer dritten Nachricht, MSG3, von dem UE, wobei die MSG3 eine Radio-Resource-Control-, RRC, Verbindungwiederherstellungsanfrage umfasst; und
Zurücksenden (S303) einer vierten Nachricht, MSG4, an das UE, wobei die MSG4 die RRC-Verbindungswiederherstellungsdaten und Downlink-Daten umfasst, die gesendet werden sollen,
**dadurch gekennzeichnet, dass**
die MSG4 ferner Angabeinformationen umfasst, die angeben, ob es Downlink-Daten gibt, die im Anschluss an das UE gesendet werden sollen,
wenn die MSG4 Angabeinformationen umfasst, die angeben, dass es keine Downlink-Daten gibt, die im Anschluss an das UE gesendet werden wollen, Empfangen einer fünften Nachricht, MSG5, von dem UE, das in dem inaktiven Zustand beibehalten wird, wobei die MSG5 Angabeinformationen enthält, die einen erfolgreichen Empfang der Downlink-Daten angeben; oder
wenn die MSG4 Angabeinformationen umfasst, die angeben, dass es Downlink-Daten gibt, die an das UE gesendet werden sollen, nach dem Empfang einer fünften Nachricht, MSG5, von dem UE, das in einen verbunden Zustand versetzt ist, Senden einer RRC-Verbindungsabbausignalisierung an das UE, sobald die Downlink-Daten vollständig gesendet sind, wobei die MSG5 Angabeinformationen enthält, die einen erfolgreichen Empfang der Downlink-Daten angeben.

4. Verfahren nach Anspruch 3, das ferner umfasst:
nach dem Zurücksenden der MSG4 an das UE, wiederholtes Senden der MSG4, wenn eine fünfte Nachricht, MSG5, die von dem UE gesendet wird, nicht innerhalb einer vorbestimmten Dauer empfangen wird, wobei die MSG5 Angabeinformationen enthält, die den erfolgreichen Empfang der Downlink-Daten angeben.

5. Benutzergerät, UE, **dadurch gekennzeichnet, dass** das UE in einem inaktiven Zustand aufweist:
ein erstes Empfangsmodul (61), das dazu ausgebildet ist, eine Paging-Signalisierung von einer Basisstation zu empfangen;
ein Initiierungs- und Sendemodul (62), das dazu ausgebildet ist, einen Random Access gemäß der von dem ersten Empfangsmodul empfangenen Paging-Signalisierung zu initiieren und eine dritte Nachricht, MSG3, an die Basisstation zu senden, wobei die MSG3 eine Radio-Resource-Control-, RRC, Verbindungwiederherstellungsanfrage umfasst; und
ein zweites Empfangsmodul (63), das dazu ausgebildet ist, eine vierte Nachricht, MSG4, zu empfangen, die gemäß der von dem Initiierungs- und Sendemodul gesendeten MSG3 zurückgesendet wird, wobei die MSG4 RRC-Verbindungswiederherstellungsdaten und Downlink-Daten umfasst, die gesendet werden sollen,
**dadurch gekennzeichnet, dass**
die MSG4 ferner Angabeinformationen umfasst, die angeben, ob es Downlink-Daten gibt, die im Anschluss an das UE gesendet werden sollen,
wobei das UE ferner aufweist:
ein Sende- und Beibehaltungsmodul (64), das dazu ausgebildet ist, wenn das zweite Empfangsmodul die MSG4 von der Basisstation empfängt, eine fünfte Nachricht, MSG5, an die Basisstation zu senden, wenn die MSG4 Angabeinformationen umfasst, die angeben, dass es keine Downlink-Daten gibt, die im Anschluss an das UE gesendet werden sollen, und das UE weiterhin in dem inaktiven Zustand zu behalten, wobei die MSG5 Angabeinformationen enthält, die einen erfolgreichen Empfang der Downlink-Daten angeben; oder
ein Sende- und Versetzungsmodul (65), das dazu ausgebildet ist, wenn das zweite Empfangsmodul die MSG4 von der Basisstation empfängt, eine fünfte Nachricht, MSG5, an die Basisstation zu senden, wenn die MSG4 Angabeinformationen umfasst, die angeben, dass es Downlink-Daten gibt, die an das UE gesendet werden sollen, und das UE in einen verbundenen Zustand zu versetzen, wobei die MSG5 Angabeinformationen enthält, die einen erfolgreichen Empfang der Downlink-Daten angeben.

6. UE nach Anspruch 5, das ferner aufweist:
ein Empfangs- und Versetzungsmoduls (66), das dazu ausgebildet ist, nachdem das Sende- und Versetzungsmodul das UE in den verbundenen Zustand versetzt, die RRC-Verbindungsabbausignalisierung von der Basisstation zu empfangen, sobald die Downlink-Daten vollständig empfangen sind, und das UE gemäß der RRC-Verbindungsabbausignalisierung in den inaktiven Zustand zu versetzen.

7. Basisstation, **dadurch gekennzeichnet, dass** die Basisstation aufweist:
ein Bestimmungs- und Sendemodul (91), das dazu ausgebildet ist, wenn bestimmt wird, dass Downlink-Daten über direkte Übertragung an ein Benutzergerät, UE, in einem inaktiven Zustand gesendet werden, eine Paging-Signalisierung an das UE zu senden;
ein erstes Empfangsmodul (92), das dazu ausgebildet ist, nachdem das Bestimmungs- und Sendemodul die Paging-Signalisierung an das UE sendet, eine dritte Nachricht, MSG3, von dem UE zu empfangen, wobei die MSG3 eine Radio-Resource-Control-, RRC, Verbindungwiederherstellungsanfrage umfasst; und
ein Rücksendemodul (93), das dazu ausgebildet ist, nachdem das erste Empfangsmodul die MSG3 empfängt, eine vierte Nachricht, MSG4, an das UE zurückzusenden, wobei die MSG4 RRC-Verbindungswiederherstellungsdaten und Downlink-Daten umfasst, die gesendet werden sollen,
**dadurch gekennzeichnet, dass**
die MSG4 ferner Angabeinformationen umfasst, die angeben, ob es Downlink-Daten gibt, die im Anschluss an das UE gesendet werden sollen,
wobei die Basisstation ferner aufweist:
ein zweites Empfangsmodul (94), das dazu ausgebildet ist, wenn die von dem Rücksendemodul zurückgesendete MSG4 Angabeinformationen umfasst, die angeben, dass es keine Downlink-Daten gibt, die im Anschluss an das UE gesendet werden sollen, eine fünfte Nachricht, MSG5, von dem UE zu empfangen, das in dem inaktiven Zustand beibehalten wird, wobei die MSG5 Angabeinformationen enthält, die einen erfolgreichen Empfang der Downlink-Daten angeben; oder
ein Empfangs- und Sendemodul (95), das dazu ausgebildet ist, wenn die von dem Rücksendemodul zurückgesendete MSG4 Angabeinformationen umfasst, die angeben, dass es Downlink-Daten gibt, die an das UE gesendet werden sollen, eine RRC-Verbindungsabbausignalisierung an das UE zu senden, sobald die Downlink-Daten vollständig gesendet wurden, nach dem Empfang einer fünften Nachricht, MSG5, von dem UE, das in einen verbundenen Zustand versetzt wird, wobei die MSG5 Angabeinformationen enthält, die einen erfolgreichen Empfang der Downlink-Daten angeben.

8. Basisstation nach Anspruch 7, die ferner aufweist:
ein wiederholtes Sendemodul (96), das dazu ausgebildet ist, nachdem das Rücksendemodul die MSG4 an das UE zurücksendet, die MSG4 wiederholt zu senden, wenn eine fünfte Nachricht, MSG5, die von dem UE gesendet wird, nicht innerhalb einer vorbestimmten Dauer empfangen wird, wobei die MSG5 Angabeinformationen enthält, die einen erfolgreichen Empfang der Downlink-Daten angeben.

9. Computerlesbares Speichermedium, auf dem ein Computerprogramm gespeichert ist, das von einem Prozessor ausgeführt wird, um die Schritte des Verfahrens nach Anspruch 1 oder 2 zu implementieren.

10. Computerlesbares Speichermedium, auf dem ein Computerprogramm gespeichert ist, das von einem Prozessor ausgeführt wird, um die Schritte des Verfahrens nach Anspruch 3 oder 4 zu implementieren.

## Revendications

1. Procédé de transmission de données de liaison descendante, mis en oeuvre par un équipement utilisateur, UE, dans un état inactif, le procédé comprenant :
la réception (S101) d'une signalisation de radiomessagerie à partir d'une station de base ;
le lancement (S102) d'un accès aléatoire selon la signalisation de radiomessagerie, et l'envoi d'un troisième message, MSG3, à la station de base, le MSG3 comprenant une demande de récupération de connexion de commande de ressource radio, RRC ; et
la réception (S103) d'un quatrième message, MSG4, à partir de la station de base, le MSG4 comprenant une récupération de connexion RRC et des données de liaison descendante à envoyer,
**caractérisé en ce que,**
le MSG4 comprend en outre des informations d'indication indiquant s'il y a des données de liaison descendante à envoyer à l'UE ultérieurement ;
lors de la réception du MSG4 à partir de la station de base, l'envoi d'un cinquième message, MSG5, à la station de base dans un cas où le MSG4 comprend des informations d'indication indiquant qu'il n'y a pas de données de liaison descendante à envoyer à l'UE ultérieurement, et le fait de continuer à maintenir l'UE dans l'état inactif, le MSG5 portant des informations d'indication indiquant une réception réussie des données de liaison descendante ; ou
lors de la réception du MSG4 à partir de la station de base, l'envoi d'un cinquième message, MSG5, à la station de base dans un cas où le MSG4 comprend des informations d'indication indiquant qu'il y a des données de liaison descendante à envoyer à l'UE, et la commutation de l'UE à un état connecté, le MSG5 portant des informations d'indication indiquant une réception réussie des données de liaison descendante.

2. Procédé selon la revendication 1, comprenant en outre :
après la commutation de l'UE à l'état connecté, la réception d'une signalisation de libération de connexion RRC à partir de la station de base lorsque les données de liaison descendante sont reçues complètement, et la commutation de l'UE à l'état inactif selon la signalisation de libération de connexion RRC.

3. Procédé de transmission de données de liaison descendante, mis en oeuvre par une station de base, le procédé comprenant :
lorsque (S301) des données de liaison descendante sont déterminées comme étant transmises par transmission directe à un équipement utilisateur, UE, dans un état inactif, l'envoi d'une signalisation de radiomessagerie à l'UE ;
la réception (S302) d'un troisième message, MSG3, à partir de l'UE, le MSG3 comprenant une demande de récupération de connexion de commande de ressource radio, RRC ; et
le renvoi (S303) d'un quatrième message, MSG4, à l'UE, le MSG4 comprenant une récupération de connexion RRC et des données de liaison descendante à envoyer,
**caractérisé en ce que,**
le MSG4 comprend en outre des informations d'indication indiquant s'il y a des données de liaison descendante à envoyer à l'UE ultérieurement,
dans un cas où le MSG4 comprend des informations d'indication indiquant qu'il n'y a pas de données de liaison descendante à envoyer à l'UE ultérieurement, la réception d'un cinquième message, MSG5, à partir de l'UE qui est maintenu dans l'état inactif, le MSG5 portant des informations d'indication indiquant une réception réussie des données de liaison descendante ; ou
dans un cas où le MSG4 comprend des informations d'indication indiquant qu'il y a des données de liaison descendante à envoyer à l'UE, après la réception d'un cinquième message, MSG5, à partir de l'UE qui est commuté à un état connecté, l'envoi d'une signalisation de libération de connexion RRC à l'UE lorsque les données de liaison descendante sont envoyées complètement, le MSG5 portant des informations d'indication indiquant une réception réussie des données de liaison descendante.

4. Procédé selon la revendication 3, comprenant en outre :
après le renvoi du MSG4 à l'UE, l'envoi de manière répétée du MSG4 lorsqu'un cinquième message, MSG5, envoyé par l'UE n'est pas reçu dans une durée prédéfinie, le MSG5 portant des informations d'indication indiquant une réception réussie des données de liaison descendante.

5. Équipement utilisateur, UE, **caractérisé en ce que,** dans un état inactif, l'UE comprenant :
un premier module de réception (61), configuré pour recevoir une signalisation de radiomessagerie à partir d'une station de base ;
un module de lancement et d'envoi (62), configuré pour lancer un accès aléatoire selon la signalisation de radiomessagerie reçue par le premier module de réception, et envoyer un troisième message, MSG3, à la station de base, le MSG3 comprenant une demande de récupération de connexion de commande de ressource radio, RRC ; et
un second module de réception (63), configuré pour recevoir un quatrième message, MSG4, renvoyé, selon le MSG3 envoyé par le module de lancement et d'envoi, par la station de base, le MSG4 comprenant une récupération de connexion RRC et des données de liaison descendante à envoyer,
**caractérisé en ce que,**
le MSG4 comprend en outre des informations d'indication indiquant s'il y a des données de liaison descendante à envoyer à l'UE ultérieurement,
dans lequel l'UE comprend en outre :
un module d'envoi et de maintien (64), configuré pour envoyer, lorsque le second module de réception reçoit le MSG4 à partir de la station de base, un cinquième message, MSG5, à la station de base dans un cas où le MSG4 comprend des informations d'indication indiquant qu'il n'y a pas de données de liaison descendante à envoyer à l'UE ultérieurement, et continuer de maintenir l'UE dans l'état inactif, le MSG5 portant des informations d'indication indiquant une réception réussie des données de liaison descendante ; ou
un module d'envoi et de commutation (65), configuré pour envoyer, lorsque le second module de réception reçoit le MSG4 à partir de la station de base, un cinquième message, MSG5, à la station de base dans un cas où le MSG4 comprend des informations d'indication indiquant qu'il y a des données de liaison descendante à envoyer à l'UE, et commuter l'UE à un état connecté, le MSG5 portant des informations d'indication indiquant une réception réussie des données de liaison descendante.

6. UE selon la revendication 5, comprenant en outre :
un module de réception et de commutation (66), configuré pour recevoir, après la commutation, par le module d'envoi et de commutation, de l'UE à l'état connecté, la signalisation de libération de connexion RRC à partir de la station de base lorsque les données de liaison descendante sont reçues complètement, et commuter l'UE à l'état inactif selon la signalisation de libération de connexion RRC.

7. Station de base, **caractérisée en ce que,** la station de base comprenant :
un module de détermination et d'envoi (91), configuré pour envoyer, lorsque des données de liaison descendante sont déterminées comme étant transmises par transmission directe à un équipement utilisateur, UE, dans un état inactif, une signalisation de radiomessagerie à l'UE ;
un premier module de réception (92), configuré pour recevoir, après l'envoi, par le module de détermination et d'envoi, de la signalisation de radiomessagerie à l'UE, un troisième message, MSG3, à partir de l'UE, le MSG3 comprenant une demande de récupération de connexion de commande de ressource radio, RRC ; et
un module de renvoi (93), configuré pour renvoyer, après la réception, par le premier module de réception, du MSG3, un quatrième message, MSG4, à l'UE, le MSG4 comprenant une récupération de connexion RRC et des données de liaison descendante à envoyer,
**caractérisée en ce que,**
le MSG4 comprend en outre des informations d'indication indiquant s'il y a des données de liaison descendante à envoyer à l'UE ultérieurement,
dans laquelle la station de base comprend en outre :
un second module de réception (94), configuré pour recevoir, dans un cas où le MSG4 renvoyé par le module de renvoi comprend des informations d'indication indiquant qu'il n'y a pas de données de liaison descendante à envoyer à l'UE ultérieurement, un cinquième message, MSG5, à partir de l'UE qui est maintenu dans l'état inactif, le MSG5 portant des informations d'indication indiquant une réception réussie des données de liaison descendante ; ou
un module de réception et d'envoi (95), configuré pour envoyer, dans un cas où le MSG4 renvoyé par le module de renvoi comprend des informations d'indication indiquant qu'il y a des données de liaison descendante à envoyer à l'UE, une signalisation de libération de connexion RRC à l'UE lorsque les données de liaison descendante sont envoyées complètement après réception d'un cinquième message, MSG5, à partir de l'UE qui est commuté à un état connecté, le MSG5 portant des informations d'indication indiquant une réception réussie des données de liaison descendante.

8. Station de base selon la revendication 7, comprenant en outre :
un module d'envoi répété (96), configuré pour envoyer de manière répétée, après le renvoi, par le module de renvoi, du MSG4, à l'UE, le MSG4 lorsqu'un cinquième message, MSG5, envoyé par l'UE n'est pas reçu dans une durée prédéfinie, le MSG5 portant des informations d'indication indiquant une réception réussie des données de liaison descendante.

9. Support de stockage lisible par ordinateur sur lequel est stocké un programme informatique destiné à être exécuté par un processeur pour mettre en oeuvre les étapes du procédé selon la revendication 1 ou 2.

10. Support de stockage lisible par ordinateur sur lequel est stocké un programme informatique destiné à être exécuté par un processeur pour mettre en oeuvre les étapes du procédé selon la revendication 3 ou 4.
